# EUROPÄISCHE PATENTSCHRIFT

(11) **EP 0 717 885 B1**
(45) Veröffentlichungstag und Bekanntmachung des Hinweises auf die Patenterteilung: **07.01.1998**
(21) Anmeldenummer: 94925485.8
(22) Anmeldetag: 30.08.1994
(51) Int. Cl.: H02H 7/085

(54) **SICHERHEITSVORRICHTUNG FÜR BEWEGLICHE TEILE**
SAFETY DEVICE FOR MOVING PARTS
DISPOSITIF DE SECURITE POUR PARTIES MOBILES

(30) Priorität: 11.09.1993 DE 4330904
(43) Veröffentlichungstag der Anmeldung: 26.06.1996
(73) Patentinhaber: ITT Automotive Europe GmbH, 60488 Frankfurt am Main (DE)
(72) Erfinder: LILL, Anton, D-74348 Lauffen (DE); GAKENHOLZ, Werner, D-74321 Bietigheim-Bissingen (DE); PHILIPPS, Werner, D-71638 Ludwigsburg (DE)
(86) Internationale Anmeldenummer: EP9402868
(87) Internationale Veröffentlichungsnummer: WO9507568

(56) Entgegenhaltungen:
- EP-A- 0 328 838
- EP-A- 0 422 388
- DE-A- 3 136 746
- DE-A- 3 532 078

## Beschreibung

Die Erfindung bezieht sich auf eine Sicherheitsvorrichtung für bewegliche Teile, die motorgetrieben gegen eine Verschlußkante verfahrbar sind, insbesondere für Fensterheber und Schiebedächer von Kraftfahrzeugen.

Immer häufiger werden in Kraftfahrzeuge elektromotorische Antriebe für Fenster und Schiebedächer eingebaut, um den Fahrer bzw. den Beifahrer von der Arbeit, die mit dem Auf- und Zukurbeln eines Fensters oder Schiebedaches verbunden ist, zu entlasten. Dies stellt einerseits eine Komfortverbesserung dar, ist aber auch andererseits mit der Gefahr verknüpft, daß unbeabsichtigt Gegenstände oder Körperteile zwischen der Fensterkante und der Abschlußkante des Fensterrahmens eingeklemmt werden. Dieses Problem tritt auch bei sich automatisch schließenden Türen auf, wobei hier die Verletzungsgefahr noch sehr viel größer ist, da die Türblätter sehr viel schwerer sind als die Fensterscheiben eines Pkw's.

Es wurde daher schon recht frühzeitig vorgeschlagen, Sicherheitsvorrichtungen vorzusehen, die das Einklemmen von Gegenständen oder Körperteilen verhindern sollen. So wird in der DE-OS 37 36 400 darauf hingewiesen, daß es bekannt sei, die Stromaufnahme und/oder die Drehzahl des Antriebsmotors zu überwachen oder auch druck- oder temperaturempfindliche Sensoren zu verwenden, die dann ansprechen und ein auswertbares Signal abgeben, wenn während des Schließvorganges Fremdkörper zwischen der Fensterkante und der Abschlußkante des Rahmens gelangen.

Sowohl die Drehzahl als auch die Stromaufnahme des Antriebsmotors stellen ein Maß dafür dar, welche Kräfte auf die Scheibe wirken, und die somit als Stellkraft vom Motor aufzubringen sind. Einmal abgesehen davon, daß es häufig schwierig ist, absolute Größen zu messen, tritt bei einer Sicherheitsvorrichtung, die auf die Auswertung von absoluten Größen basiert, das Problem auf, den Ansprechschwellenwert zu bestimmen, bei dem der Einklemmschutz ansprechen soll. Legt man den Schwellwert niedrig, so kann es passieren, daß die Abschaltvorrichtung schon anspricht, obwohl das Einklemmen eines Gegenstandes nicht droht. Die seitliche Führung der Scheibe bzw. des Schiebedaches übt nämlich ebenfalls Kräfte auf die Scheibe auf, die sich je nach Umweltbedingungen ändern. So ist zum Beispiel bei tiefen Temperaturen die Führung sehr viel schwergängiger. Legt man den Schwellenwert zu hoch, so spricht der Einklemmschutz zu spät an.

Es wurde daher schon vorgeschlagen (EP 0 442 388 A1), nicht die absolute Größe zu erfassen, sondern ihre Änderung von Meßintervall zu Meßintervall. Aber auch in diesem Fall ist die Bestimmung des Absprechschwellenwertes schwierig. Wird er zu klein gewählt, so kann die Abschaltvorrichtung schon bei üblichen Schwankungen im Widerstand der Scheibenführung auftreten. Wählt man den Ansprechschwellenwert zu hoch, so kann es passieren, daß der Einklemmschutz nicht anspricht, wenn ein weicher Körper eingeklemmt wird, da die Kraftzunahme beim Zusammenquetschen eines weichen Körpers von Meßpunkt zu Meßpunkt nur gering ist. Dies hat zur Folge, daß die Einklemmschutz nicht anspricht, obwohl sehr hohe Kräfte auf den eingeklemmten Körper wirken, die aber in kleinen Schritten aufgebaut worden sind.

Aus der Darstellung des Standes der Technik ergibt sich damit die Aufgabe, eine Sicherheitsvorrichtung zu schaffen, die empfindlich und frühzeitig anspricht, aber auch nur dann reagiert, wenn tatsächlich die Gefahr besteht, daß ein Körper eingeklemmt wird.

Die Erfindung schlägt daher vor, eine Meßeinrichtung vorzusehen, die in aufeinanderfolgenden Meßintervallen eine Größe erfaßt, die die Stellkraft auf das bewegliche Teil repräsentiert. Weiterhin ist eine Auswerteschaltung vorgesehen, die die Differenz zwischen der Meßgröße in einem Startintervall und der Meßgröße in einem Endintervall bestimmt, wobei der Antrieb abgeschaltet wird, sobald die Differenz einen Ansprechschwellenwert übersteigt. Dabei ist das Startintervall dadurch definiert, daß in den Meßintervallen zwischen dem Startintervall und dem Endintervall jeweils ein Wert gemessen wird, der um einen bestimmten Betrag, dem Differenzschwellenwert, größer ist als der Wert in einem vorangegangen Meßintervall. Dieses Auswerteschema kann unabhängig davon eingesetzt werden, welche Größe tatsächlich erfaßt wird. Es kann sich dabei um die Stromaufnahme bzw. Leistungsaufnahme des Motors handeln, aber auch um die Drehzahl des Motors. Denkbar ist auch, daß die Kräfte direkt gemessen werden.

Die Grundüberlegung der Erfindung kann darin gesehen werden, daß die Kraftänderungen von Meßintervall zu Meßintervall solange aufintegriert werden, wie von Meßintervall zu Meßintervall eine gewisse Steigerung erzielt wird. Fällt die Kraftsteigerung unter einen bestimmten Wert, so beginnt die Auf integrierung neu beim Wert Null.

Auf diese Weise werden Kraftschwankungen, die nicht durch eingeklemmte Körper hervorgerufen werden, nicht registriert. Kurzzeitige Störungen lassen zwar eine Integration beginnen, diese führt aber nicht bis zum Ansprechschwellenwert. Im allgemeinen wird die Integration nach einigen Schritten abbrechen. Wächst aber die Kraft langsam aber kontinuierlich, wie dies zum Beispiel bei weichen Einklemmkörpern der Fall ist, so wird der Antrieb unterbrochen, sobald der aufintegrierte Wert den Ansprechschwellenwert erreicht. Da aber schon kleine Änderungen der Kraft zu Beginn des Einklemmvorganges in die Integrierung mit einbezogen werden, spricht die Sicherheitsvorrichtung frühzeitig an.

Eine einfache zu erfassende Größe, die die Stellkraft repräsentiert, ist die Drehzahl des Antriebsmotors. Diese wiederum kann am einfachsten dadurch erfaßt werden, daß die Umlaufzeit je Umdrehung der Antriebswelle des Motors ermittelt wird.

Die Auswerteschaltung enthält in vorteilhafter Weise ein Schieberegister mit den Speichernummern 1 bis 4, wobei Speicherplatz Nr. 1 der aktuellen Wert enthält und die Nr. 2 bis 4 die vorhergehenden Meßwerte.

Die Auswerteschaltung enthält einen weiteren Speicherplatz für den Startmeßwert. Dieser Speicherplatz wird nur dann mit dem Wert aus dem Speicherplatz Nr. 4 des Schieberegisters überschrieben, wenn die Differenz zwischen den Werten des Speicherplatzes Nr. 4 und des Speicherplatzes Nr. 1 kleiner ist als ein vorbestimmter Differenzschwellenwert.

Anschließend wird die Differenz zwischen dem Wert im Speicherplatz Nr. 1 und dem Wert im Speicherplatz für den Startmeßwert gebildet. Übersteigt die Differenz den Ansprechschwellenwert, so spricht der Einklemmschutz an.

Es hat sich weiterhin als vorteilhaft herausgestellt, wenn die Werte in den Schieberegistern, bevor sie weiter ausgewertet werden, einer Modifizierung unterzogen werden, die zu einer gewissen Glättung der Werte führt. In der Regel reicht es aus, wenn der Wert im Speicherplatz Nr. 3 geändert wird und zwar in der Weise, daß zunächst der größte Wert in den Speicherplätzen Nr. 1 und 2 bestimmt wird. Wenn der Wert im Speicherplatz Nr. 3 zwischen diesem größten Wert und dem Wert im Speicherplatz Nr. 4 liegt, wird er nicht geändert. Sollte er außerhalb dieses Wertebereichs liegen, so wird in bestimmten Fällen in den Speicherplatz Nr. 3 der Mittelwert zwischen dem Wert im Speicherplatz Nr. 4 und dem größten Wert eingeschrieben.

Im folgenden soll ein Ausführungsbeispiel der Erfindung näher erläutert werden, wobei die notwendigen Rechenschritte in zwei Ablaufdiagrammen dargestellt sind.

Nicht dargestellt ist das zu bewegende Teil, zum Beispiel eine Pkw-Fensterscheibe, und der Antriebsmotor.

Am Motor ist ein Sensor angebracht, der pro Umdrehung der Ankerwelle einen Impuls an das Steuergerät abgibt. Der Sensor besitzt zwei Ausgänge, deren Signale um 90 Grad versetzt sind. Dabei führt ein Ausgang des Sensors auf einen Interrupteingang des Steuergerätes. Wird während einer Flanke am Interrupteingang der Pegel des zweiten Sensorausganges betrachtet, so kann daran die Drehrichtung des Motors erkannt werden. Durch Zählen der Impulse am Interrupteingang, kann unter Beachtung der Drehrichtung immer die momentane Position der Scheibe bestimmt werden. Voraussetzung dafür ist, daß der Zähler in einer bestimmten Stellung der Scheibe auf einen Synchronwert gesetzt wurde.

Auf diese Weise, kann die Position der Scheibe je nach Auslegung des Motorgetriebes auf ca. 2 bis 3 mm genau bestimmt werden.

Der gesamte Schließweg einer Fahrzeugseitenscheibe entspricht etwa 200 bis 300 Impulsen. Ein Synchronwert wird gesetzt, wenn die Scheibe am oberen Anschlag blockiert. Der Synchronwert wird ein wenig größer gewählt, als die errechnete Zahl von Impulsen über den Schließweg der Scheibe. Bei einer Scheibe, deren Schließweg durch 226 Impulse dargestellt werden kann, wird der Synchronwert zum Beispiel auf 250 gesetzt.

Die im folgenden beschriebene Schaltung, die den Einklemmschutz realisiert, ist nur solange aktiv, wie die Scheibe nicht in den Abschlußfalz der Abschlußkante des Rahmens hineinläuft. Dies entspricht im Ausführungsbeispiel ein Impulswert von 242.

Die Drehzahl des Motors wird erfaßt, in dem die Zeit zwischen zwei aufeinanderfolgenden Impulsen ermittelt wird. Der zu erfassende Zeitbereich liegt etwas zwischen 10 und 100 Millisekunden. Dies entspricht einer Drehzahl von 6000 bis 600 Umdrehungen pro Minute.

Die Auswerteschaltung sieht ein Schieberegister mit den Speichern Nr. 1 bis 4 vor. Mit jedem Takt, also mit jeder Umdrehung des Antriebsmotors wird ein neuer Meßwert erfaßt, der in den Speicherplatz Nr. 1 als Drehzahl eingeschrieben wird. Die Belegungen der anderen Speicherplätze wurde zuvor um einen Speicherplatz verschoben. Die vier Speicherplätze bilden damit die letzten vier Meßwerte ab.

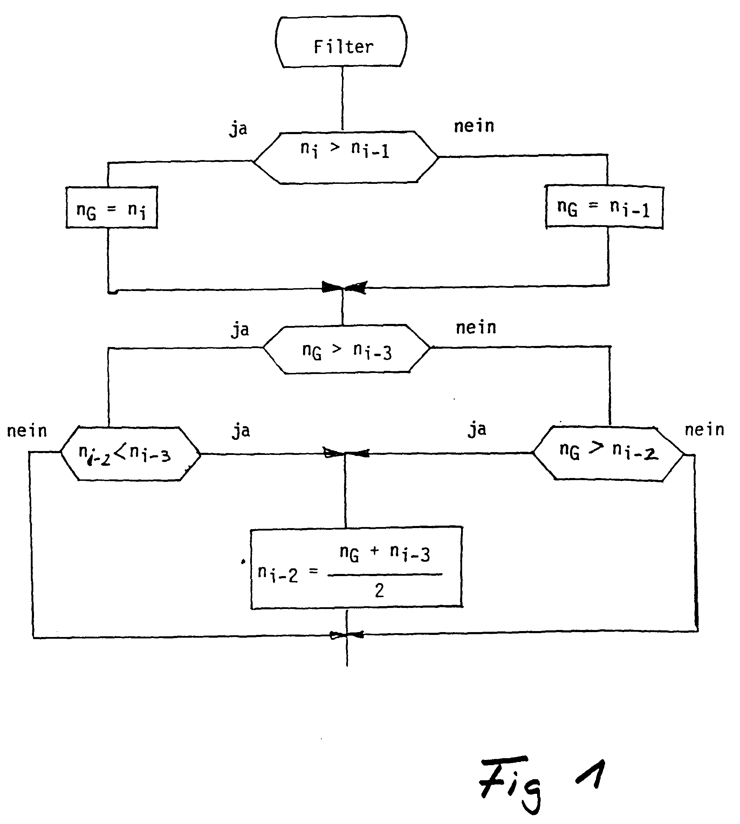

Vor einer weiteren Auswertung erfolgt zunächst eine Filterung der Meßwerte, bzw. eine Korrektur des Meßwertes auf Speicherplatz 3. Die Art der Filterung ist in Figur 1 dargestellt.

Mit nᵢ wird der aktuelle Meßwert bezeichnet. Er ist im Speicherplatz Nr. 1 abgelegt. Die Indizierung i - 1, i - 2 und i - 3 beziehen sich auf die vorangegangenen Messungen, die in den Speicherplätzen Nr. 2 bis 4 abgelegt sind. Das Berechnungsschema enthält eine erste Abzweigung, in der geprüft wird, ob der Wert nᵢ größer ist als der Wert nᵢ₋₁. Jenachdem wie die Entscheidung ausfällt, wird in einem Zwischenspeicher der Wert nᵢ oder nᵢ₋₁ abgelegt, der im folgenden mit n_{g} bezeichnet wird. n_{g} ist somit der größere Wert von den beiden Werten nᵢ oder nᵢ₋₁. In einem nächsten zweistufigen Schritt wird überprüft, ob der Meßwert nᵢ₋₂ zwischen n_{g} und nᵢ₋₃ liegt. Dazu wird zunächst überprüft, ob n_{g} größer als nᵢ₋₃ ist, wenn ja, (linker Ast) wird überprüft, ob nᵢ₋₂ kleiner als nᵢ₋₃ ist. Ist dies der Fall, wird der Wert nᵢ₋₂ ersetzt durch den Mittelwert von ng und nᵢ₋₃, und im Speicherplatz Nr. 3 überschrieben.

Ergibt die Entscheidung, daß nᵢ₋₃ größer ist als n_{g} (rechter Ast) wird überprüft, ob nᵢ₋₂ kleiner ist als n_{g}. Ist dies der Fall, wird, wie beschrieben, der Mittelwert gebildet. In allen anderen Fällen, bleibt der Wert für nᵢ₋₂ unverändert und es erfolgt keine Überschreibung von Speicherplatz Nr. 3.

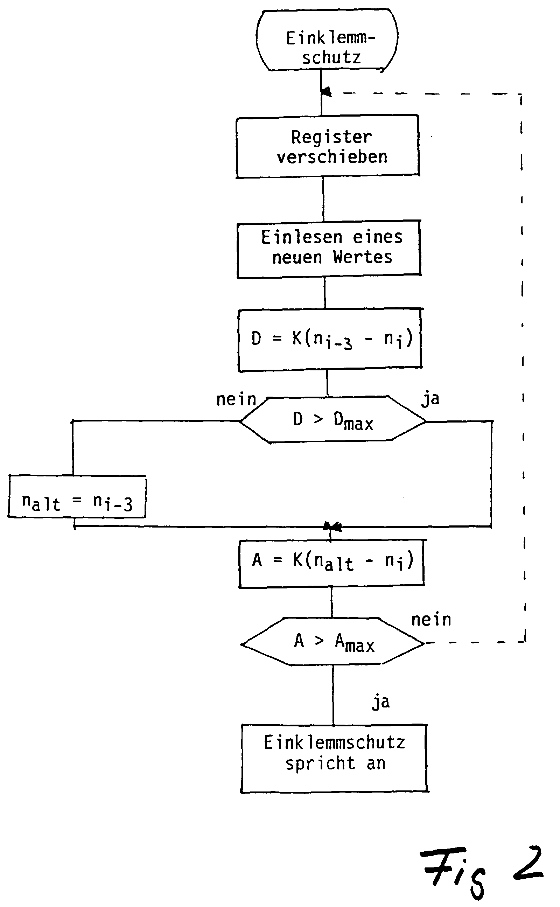

Die Aktivierung des Einklemmschutzes erfolgt nach dem Algorithmus der Figur 2. Voraussetzung hierfür ist, daß ein Synchronwert für die Positionserfassung gesetzt ist, der Fahrer eine entsprechende Taste betätigt und mindestens vier Werte für die Drehzahl erfaßt worden sind. Der Einklemmschutz ist nur im mittleren Bereich des Fensterschließweges aktiviert. Die ersten 50 mm gemessen vom unteren Anschlag werden durchfahren, ohne daß der Einklemmschutz aktiviert ist. Das Entspannen der Mechanik in diesen Bereichen führt zunächst zu hohen Drehzahlen, die danach schnell abfallen. Die Abnahme dieser Drehzahl würde eine Zunahme von Kraft vortäuschen, die den Einklemmschutz, ohne daß dies beabsichtigt ist, zum Ansprechen bringt. Auch kurz vor dem oberen Anschlag ist der Einklemmschutz deaktiviert, hier läuft nämlich die Scheibe in einen Falz, wozu hohe Stellkräfte notwendig sind. Würde hier der Einklemmschutz aktiviert, würde die Scheibe wieder geöffnet.

Ansprechen des Einklemmschutzes bedeutet, daß zunächst der Motor sofort abgeschaltet, und nach einer Verzögerungszeit von 50 Millisekunden die Scheibe um ca. 50 mm in Öffnungsrichtung bewegt wird, um den Gegenstand wieder freizugeben. Es sollte auf jeden Fall eine Öffnung von mindestens 200 mm freigegeben werden, das heißt der Abstand zwischen der oberen Kante der Scheibe und der oberen Falzkante soll 200 mm betragen.

Wie schon erläutert, wird die Drehzahl des Motors gemessen. Dieser steht bekanntermaßen in einem linearen Zusammenhang mit der Stellkraft des Motors solange eine konstante Versorgungsspannung für den Motor vorliegt. Dies kann über die Dauer eines Schließvorganges angenommen werden.

Der Einklemmschutz-Algorithmus besteht aus den folgenden Schritten. Die Speicherplätze des Registers werden um jeweils einen Speicherplatz verschoben. Dann wird ein neuer aktueller Wert in das Speicherregister Nr. 1 eingelesen. Anschließend wird die oben beschriebene Filterung vorgenommen. Sodann wird der aktuelle Anstieg der Kraft bestimmt, indem die Differenz gebildet wird zwischen dem Wert im Speicherplatz 1 und dem Wert im Speicherplatz 4. Dies sind die Werte nᵢ und nᵢ₋₃. Durch Multiplikation mit einer motorspezifischen Konstante K erhält man einen momentanen Differenzwert D der Kraft. Dieser wird mit einem Differenzschwellenwert Dₘₐₓ verglichen, der im Ausfürungsbeispiel bei 10N liegt. Liegt der Anstieg unter dem Schwellenwert, so wird in ein Zwischenregister der Wert nᵢ₋₃ eingeschrieben, der im folgenden mit nₐₗₜ bezeichnet wird. Liegt er oberhalb des Schwellenwerts, so wird der Zwischenspeicher nicht geändert. Im Zwischenspeicher liegt somit stets der Meßwert vor, der zum Anfang einer ansteigenden Kraftkurve vorhanden ist. Er kann als Startwert bezeichnet werden. Sodann wird die Differenz gebildet zwischen nᵢ und nₐₗₜ. Dieser Wert wird ebenfalls mit motorspezifischem K multipliziert, man erhält einen Kraftwert A. Liegt dieser Wert A über einen Ansprechschwellenwert Aₘₐₓ, so spricht der Einklemmschutz an. Der Ansprechschwellenwert liegt im Ausführungsbeispiel bei Aₘₐₓ = 30 N. Ist dies nicht der Fall, beginnt das Berechnungsschema von vorn mit der Verschiebung der Registerspeicherplätze und der Einlesung eines neuen Meßwertes.

## Patentansprüche

1. Sicherheitsvorrichtung für bewegliche Teile, die motorgetrieben gegen eine Verschlußkante verfahrbar sind, insbesondere für Fensterheber und Schiebedächer von Kraftfahrzeugen, mit einer Meßeinrichtung, die in aufeinander folgenden Meßintervallen eine Größe erfaßt, die die Stellkraft auf das bewegliche Teil repräsentiert, mit einer Auswerteschaltung, die die Differenz bestimmt zwischen der Meßgröße in einem Startintervall und der aktuellen Meßgröße in einem Endintervall, wobei der Antrieb abgeschaltet wird, sobald die Differenz einen Ansprechschwellenwert übersteigt, dadurch gekennzeichnet, daß das Startintervall dadurch definiert ist, daß in den Meßintervallen zwischen dem Startintervall und dem Endintervall jeweils ein Wert gemessen wird, der um einen bestimmten Betrag größer ist als der Wert in einem vorangegangenen Meßintervall.

2. Sicherheitsvorrichtung nach Anspruch 1, dadurch **gekennzeichnet**, daß die Drehzahl des Antriebsmotors gemessen wird.

3. Sicherheitsvorrichtung nach Anspruch 2, dadurch **gekennzeichnet**, daß die Umlaufzeit je Umdrehung der Antriebswelle des Antriebsmotors ermittelt wird.

4. Sicherheitsvorrichtung nach einem der vorhergehenden Ansprüche, dadurch **gekennzeichnet**, daß die Auswerteschaltung ein Schieberegister mit den Speichernummern 1 bis 4 aufweist und einen Speicherplatz für den Startmeßwert, wobei in den Speicherplatz für den Startmeßwert der Wert des Speicherplatzes Nr. 4 eingeschrieben wird, wenn die Differenz zwischen den Werten in den Speichernummern 1 und 4 kleiner ist, als ein Differenzschwellenwert.

5. Sicherheitsvorrichtung nach Anspruch 4, dadurch **gekennzeichnet**, daß die Werte in den Schieberegistern, bevor sie ausgewertet werden, einer Modifizierung unterzogen werden.

6. Sicherheitsvorrichtung nach Anspruch 5, dadurch **gekennzeichnet**, daß der Wert im Speicherplatz Nr. 3 nach einem bestimmten Regelschema modifiziert wird.

7. Sicherheitsvorrichtung nach Anspruch 6, dadurch **gekennzeichnet**, daß zunächst der größte Wert in den Speicherplätzen Nr. 1 und 2 bestimmt wird, daß der Wert im Speicherplatz Nr. 3 mit dem größten Wert und dem Wert im Speicherplatz Nr. 4 verglichen wird.

## Claims

1. A safety appliance for manipulatable parts which, through motor-driven operation, are movable against a closing edge, in particular, for window regulators and sliding roofs of automotive vehicles, comprising a measuring instrument which, in successive measuring intervals, detects a quality representing the operating force exerted on the movable part, further comprising an evaluating circuit determining the difference between the measured value in a start-up interval and the present measured value in a final interval, with the drive being switched off as soon as the difference exceeds a response threshold,
**characterized** in that the start-up interval is defined in that within the measuring intervals between the start-up interval and the final interval a value is respectively measured which exceeds the value in a preceding measuring interval by a certain amount.

2. A safety appliance as claimed in claim 1,
characterized in that the number of revolutions of the driving motor is measured.

3. A safety appliance as claimed in claim 2,
characterized in that the rotation time per revolution of the driving shaft of the driving motor is determined.

4. A safety appliance as claimed in any one of the preceding claims,
characterized in that the evaluating circuit comprises a slide register with register numbers 1 to 4, and a register location for the start-up measured values, with the value of location No. 4 being written into the register location for the start-up measured value when the difference between the values in numbers 1 and 4 is less than the differential threshold.

5. A safety appliance as claimed in claim 4,
characterized in that the values in the slide registers prior to evaluation thereof are subjected to a modification.

6. A safety appliance as claimed in claim 5,
characterized in that the value in location No. 3 is modified according to a predetermined regulating pattern.

7. A safety appliance as claimed in claim 6,
characterized in that first the peak value in registers Nos. 1 and 2 is determined, and the value in register No. 3 is compared to the peak value and the value in register No. 4.

## Revendications

1. Dispositif de sécurité pour des pièces mobiles, qui sont déplaçables en étant entraînées par un moteur contre un bord de fermeture, notamment pour des lève-glaces et des toits coulissants de véhicules automobiles, comportant un dispositif de mesure, qui détecte, à des intervalles de mesure successifs, une grandeur qui représente la force de réglage appliquée à la pièce mobile, un circuit d'exploitation, qui détermine la différence entre la grandeur de mesure dans un intervalle de démarrage et la grandeur actuelle de mesure dans un intervalle final, le dispositif d'entraînement étant arrêté dès que la différence dépasse une valeur de seuil de réponse, caractérisé en ce que l'intervalle de démarrage est défini par le fait que pendant les intervalles de mesure entre l'intervalle de départ et l'intervalle final est exécutée respectivement la mesure d'une valeur qui est supérieure, d'une valeur déterminée, à la valeur présente dans un intervalle de mesure précédent.

2. Dispositif de sécurité selon la revendication 1, caractérisé en ce qu'on mesure la vitesse de rotation du moteur d'entraînement est mesurée.

3. Dispositif de sécurité selon la revendication 2, caractérisé en ce qu'on détermine la durée de cycle pour chaque rotation de l'arbre d'entraînement du moteur d'entraînement.

4. Dispositif de sécurité selon l'une des revendications précédentes, caractérisé en ce que le circuit d'exploitation comporte un registre à décalage possédant des numéros de mémoire 1 à 4 et un emplacement de mémoire pour la valeur de mesure de départ, la valeur de l'emplacement de mesure N°4 étant inscrite à l'emplacement de mémoire pour la valeur de mesure de départ lorsque la différence entre les valeurs présentes aux numéros de mémoire 1 et 4 est inférieure à une valeur de seuil de différence.

5. Dispositif de sécurité selon la revendication 4, caractérisé en ce que les valeurs situées dans les registres à décalage sont soumises à une modification avant d'être exploitées.

6. Dispositif de sécurité selon la revendication 5, caractérisé en ce que la valeur à l'emplacement de mémoire N°3 est modifiée selon un schéma de réglage déterminé.

7. Dispositif de sécurité selon la revendication 6, caractérisé en ce qu'on détermine tout d'abord la valeur maximale aux emplacements de mémoire N°1 et 2 et l'on compare la valeur à l'emplacement de mémoire N°3 à la valeur maximale et à la valeur située à l'emplacement de mémoire N°4.
